# EUROPEAN PATENT APPLICATION

(11) **EP 4 590 039 A1**
(43) Date of publication of application: **23.07.2025**
(21) Application number: 22958830.6
(22) Date of filing: 15.09.2022
(51) Int. Cl.: H04W 64/00, H04W 56/00

(54) **TERMINAL**

(71) Applicant: NTT DOCOMO, INC., Tokyo 100-6150 (JP)
(72) Inventor: YOSHIOKA Shohei, Tokyo 100-6150 (JP); NAGATA Satoshi, Tokyo 100-6150 (JP); YOU Luhua, Beijing 100190 (CN); SUN Weiqi, Beijing 100190 (CN); WANG Jing, Beijing 100190 (CN); CHEN Lan, Beijing 100190 (CN); ZHAO Jinming, Beijing 100876 (CN); LI Yong, Beijing 100876 (CN)
(74) Representative: Hoffmann Eitle
(86) International application number: PCT/JP2022/034652
(87) International publication number: WO 2024/057510

(57) **Abstract**

A terminal includes: a control unit that acquires position information of the terminal based on a radio signal from a satellite positioning system; and a transmitting unit that transmits the position information to a base station. The control unit acquires assistance information that is information on a movement of the terminal, and the transmitting unit transmits the assistance information to the base station.

## Description

### TECHNICAL FIELD

The present disclosure relates to a terminal using a satellite positioning system.

### BACKGROUND ART

The 3rd Generation Partnership Project (3GPP) has prepared a specification for the 5th generation mobile communication system (also referred to as 5G, New Radio (NR), or Next Generation (NG)), and further a specification for a next-generation mobile communication system referred to as Beyond 5G, 5G Evolution, or 6G is also being prepared.

3GPP Release 18 has discussed performance enhancement of Internet of Things (IoT)-Non-Terrestrial Network (NTN) (Non-Patent Literature 1). IoT is a technology in which a device such as a sensor is connected to a network, and information acquired by the device is transmitted and received via the network. The device may be mounted on a User Equipment (UE) and may be connected to the network via the UE. The NTN is a technology in which communication between a base station and the UE is performed via a flying object such as a satellite in the sky to enable communication even in an area where radio waves are difficult to reach.

### CITATION LIST

### NON-PATENT LITERATURE

Non-Patent Literature 1: "Revised WID on IoT NTN enhancements", RP-221806, 3GPP TSG RAN Meeting #96, 3GPP, June. 6-9, 2022

### SUMMARY OF THE INVENTION

Incidentally, a satellite positioning system such as a Global Navigation Satellite System (GNSS) is sometimes used for communication between a base station and a UE. Position information of the UE is required for calculating a Timing Advance (TA) value in Uplink (UL) transmission of the UE, for example. Therefore, when the UE moves, it is necessary to receive a radio signal from the satellite positioning system and to update the position information of the UE. The position information of the UE is shared between the UE and the base station.

In particular, IoT-NTN uses relatively low-speed communication standards such as an LTE-Machine (M), a Narrow Band (NB)-IoT, and enhanced Machine Type Communication (eMTC). In addition, the time regarding UL transmission of a UE tends to be long because communication is performed via a flying object in the sky.

However, there is a problem that power consumption of a UE increases by receiving a radio signal from a satellite positioning system and updating position information of the UE.

The present disclosure has been made in view of such a situation, and an object of the present disclosure is to provide a terminal that can suppress power consumption for updating position information of a UE.

One aspect of the present disclosure provides a terminal including: a control unit 270 that acquires position information of the terminal based on a radio signal from a satellite positioning system; and a transmitting unit 210 that transmits the position information to a base station, in which the control unit 270 acquires assistance information that is information on a movement of the terminal, and the transmitting unit 210 transmits the assistance information to the base station.

One aspect of the present disclosure provides a terminal including: a control unit 270 that acquires position information of the terminal based on a radio signal from a satellite positioning system; and a transmitting unit 210 that transmits the position information to a base station, in which the control unit 270 acquires assistance information that is information on a movement of the terminal and updates the position information based on the assistance information.

### BRIEF DESCRIPTION OF THE DRAWINGS

[FIG. 1] FIG. 1 is an overall schematic configuration diagram of a radio communication system.
[FIG. 2] FIG. 2 is a functional block diagram of a terminal.
[FIG. 3] FIG. 3 is a diagram showing a validity duration of position information and a measurement gap.
[FIG. 4] FIG. 4 is a diagram showing an example of a period in which a measurement gap is configured.
[FIG. 5] FIG. 5 is a diagram showing an example of a period in which a measurement gap is configured.
[FIG. 6] FIG. 6 is a diagram showing an example of a measurement gap offset.
[FIG. 7] FIG. 7 is a diagram showing the overlap between an entire segment and a measurement gap.
[FIG. 8] FIG. 8 is a diagram showing the overlap between part of segments and a measurement gap.
[FIG. 9] FIG. 9 is a diagram showing an example of a segment transmitted after a measurement gap.
[FIG. 10] FIG. 10 is a diagram showing an example of assistance information and an acquisition duration thereof.
[FIG. 11] FIG. 11 is a diagram showing a comparison between a measurement gap of an embodiment and a conventional transmission gap.
[FIG. 12] FIG. 12 is a diagram showing a hardware configuration example of each of a base station and a terminal.
[FIG. 13] FIG. 13 is a diagram showing a configuration example of a vehicle.

### DESCRIPTION OF EMBODIMENTS

Embodiments will be explained below with reference to the accompanying drawings. Note that the same or similar reference numerals have been attached to the same functions and configurations, and the description thereof is omitted as appropriate.

### [Embodiment]

### (1) Configuration of radio communication system

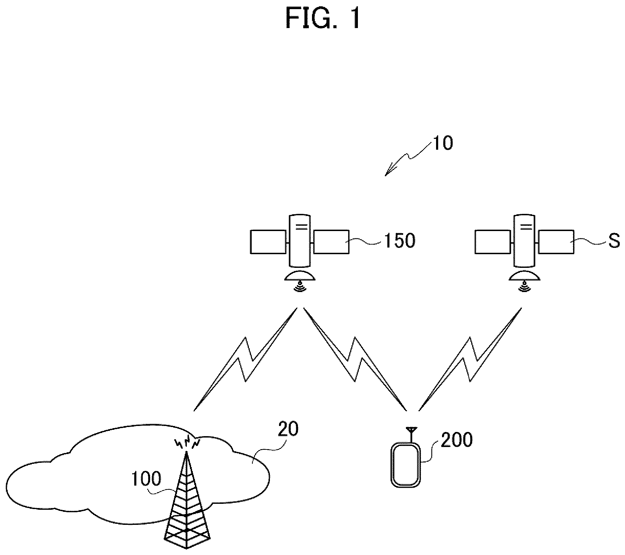

As shown in FIG. 1, a radio communication system 10 includes a Next Generation-Radio Access Network 20 (hereinafter referred to as NG-RAN 20) including a base station 100, and a terminal 200 (hereinafter referred to as UE 200). The NG-RAN 20 may simply be expressed as a "network". A specific configuration of the radio communication system 10, for example, the number of the base station 100 and the UE 200 is not limited to an example shown in FIG. 1.

The radio communication system 10 of the embodiment includes a flying object 150 that mediates communication between the base station 100 and the UE 200, and a satellite positioning system S that transmits a radio signal for acquiring position information of the UE 200.

The radio communication system 10 is compliant with a method referred to as 5G. Meanwhile, the radio communication system 10 may be compliant with a method referred to as Beyond 5G, 5G Evolution, or 6G.

The radio communication system 10 of the embodiment may support communication standards such as LTE-M, NB-IoT, and eMTC.

The base station 100 is a radio base station which transmits and receives a radio signal to and from the UE 200. The base station 100 of the embodiment transmits and receives a radio signal to and from the UE 200 via the flying object 150 which will be described later. Further, the base station 100 of the embodiment is a gNB for example, but may be an eNB.

The base station 100 of the embodiment may update the position information of the UE 200 based on assistance information which will be described later. Further, the base station 100 may transmit the updated position information of the UE 200 to the UE 200.

The flying object 150 is a satellite for example, but may be a High Altitude Platform Station (HAPS) mounted on an airship, balloon, or the like. The flying object 150 serves as a relay station which relays communication performed between the base station 100 and the UE 200.

The satellite positioning system S is a GNSS for example, but may be a satellite positioning system constituting the GNSS, such as a Global Positioning System (GPS). The satellite positioning system S includes a plurality of satellites which transmit radio signals toward the ground. The number of satellites constituting the satellite positioning system S is four, for example. The distance from the ground to each satellite is calculated from the time required to receive a radio signal transmitted from each satellite on the ground. This can specify a point where a radio signal from each satellite is received. In this way, the satellite positioning system S transmits a radio signal for specifying a reception point on the ground.

The UE 200 is a radio communication terminal which transmits and receives a radio signal to and from the base station 100. The UE 200 of the embodiment transmits and receives a radio signal to and from the base station 100 via the flying object 150. Further, the UE 200 of the embodiment can acquire the position information of the UE 200 based on a radio signal transmitted from the satellite positioning system S. In addition, it may be assumed that the UE 200 of the embodiment is mounted on a moving vehicle such as an Unmanned Aerial Vehicle (UAV) and moves.

### (2) Configuration of terminal

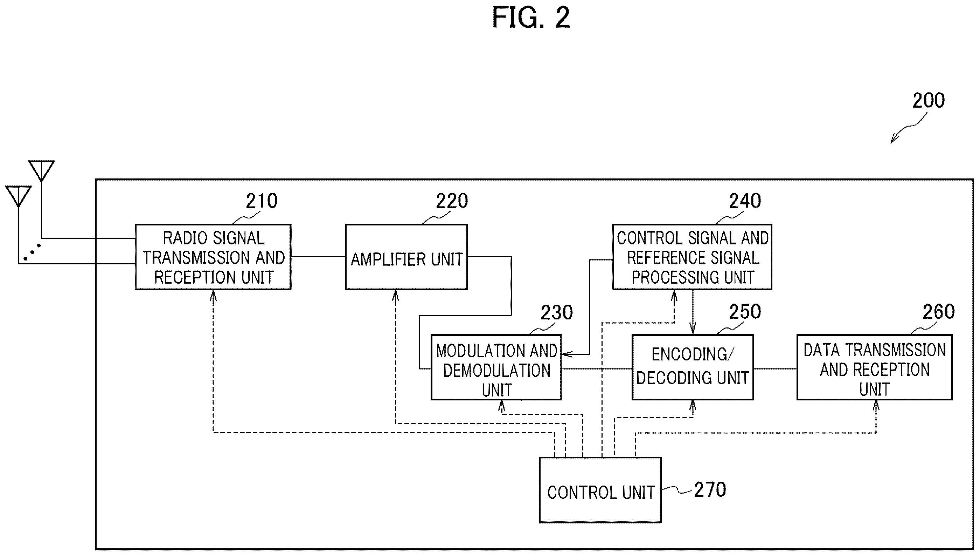

As shown in FIG. 2, the UE 200 includes a radio signal transmission and reception unit 210, an amplifier unit 220, a modulation and demodulation unit 230, a control signal and reference signal processing unit 240, an encoding/decoding unit 250, a data transmission and reception unit 260, and a control unit 270.

The radio signal transmission and reception unit 210 transmits and receives a radio signal to and from the base station 100. The radio signal transmission and reception unit 210 may constitute a transmitting unit which transmits a radio signal and a receiving unit which receives a radio signal.

The radio signal transmission and reception unit 210 of the embodiment transmits and receives a radio signal to and from the base station 100 via the flying object 150. Further, the radio signal transmission and reception unit 210 of the embodiment receives a radio signal from the satellite positioning system S.

The radio signal transmission and reception unit 210 of the embodiment transmits position information of the UE 200, which will be described later, to the base station 100. In addition, the radio signal transmission and reception unit 210 of the embodiment transmits assistance information, which will be described later, to the base station 100.

The amplifier unit 220 includes a Power Amplifier (PA)/Low Noise Amplifier (LNA) or the like. The amplifier unit 220 amplifies a radio signal output from the modulation and demodulation unit 230 to a predetermined power level. Further, the amplifier unit 220 amplifies a radio signal output from the radio signal transmission and reception unit 210.

The modulation and demodulation unit 230 performs data modulation/demodulation, transmission power configuration, resource block allocation, and the like for each predetermined communication destination (base station 100 or other base stations). In the modulation and demodulation unit 230, Cyclic Prefix-Orthogonal Frequency Division Multiplexing (CP-OFDM)/Discrete Fourier Transform-Spread-Orthogonal Frequency Division Multiplexing (DFT-S-OFDM) may be applied. Further, DFT-S-OFDM may be used not only for an UL but also for a DL.

The control signal and reference signal processing unit 240 performs processing regarding various control signals and reference signals and other radio signals transmitted and received by the UE 200.

The control signal and reference signal processing unit 240 of the embodiment acquires position information and assistance information. The position information will be described first below, and then the assistance information will be described.

### (Position information)

The control signal and reference signal processing unit 240 acquires position information of the UE 200 based on a radio signal from the satellite positioning system S. Specifically, the control signal and reference signal processing unit 240 calculates a distance to each satellite constituting the satellite positioning system S from transmission time information included in the radio signal from the satellite positioning system S and reception time information in the radio signal, and then acquires the position information of the UE 200 based on the distance.

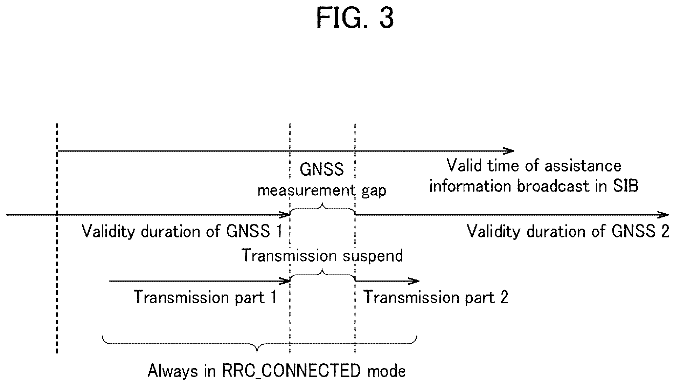

As shown in FIG. 3, a validity duration (corresponding to Validity duration of GNSS in FIG. 3) may be configured for the position information of the UE 200. The validity duration of the position information of the UE 200 may be configured by the UE 200 or may be configured by the base station 100. The radio signal transmission and reception unit 210 performs UL transmission (corresponding to Transmission part in FIG. 3) during the validity duration. The control signal and reference signal processing unit 240 may re-acquire the position information of the UE 200 based on the validity duration. The validity duration may be 10 s, 20 s, 30 s, 40 s, 50 s, 60 s, 5 min, 10 min, 15 min, 20 min, 25 min, 30 min, 60 min, 90 min, 120 min, or infinity, for example.

The position information of the UE 200 is required for calculating a TA value in communication with the base station 100, for example. Therefore, the position information of the UE 200 is acquired before starting UL transmission to the base station 100. The position information of the UE 200 is shared between the UE 200 and the base station 100.

Meanwhile, the position information of the UE 200 may be updated during UL transmission to the base station 100. This is because it is preferable to update the position information of the UE 200 during UL transmission, such as when the UE 200 moves. However, the UE 200 is not able to simultaneously perform UL transmission and acquisition of position information based on a radio signal from the satellite positioning system S.

When the position information of the UE 200 is updated during UL transmission, as shown in FIG. 3, a measurement gap (hereafter referred to as MG, corresponding to GNSS measurement gap in FIG. 3) for receiving a radio signal from the satellite positioning system S is configured by various control signals transmitted from the base station 100. The MG may be referred to as a Time Domain Window (TDW).

The MG may be configured/activated/indicated by Radio Resource Control (RRC)/Medium Access Control (MAC) Control Element (CE)/Downlink Control Information (DCI), which are various control signals transmitted from the base station 100. Further, the MG may be configured by RRC and activated by MAC CE, or may be configured by RRC and indicated by DCI. A term "indicate" may be read as a term "trigger".

Since a connection state of a radio resource control layer (corresponding to RRC_CONNECTED mode in FIG. 3) is a prerequisite for UL transmission, the MG is also configured in the connection state of the radio resource control layer. By configuring the MG, a radio signal can be received from the satellite positioning system S in the connection state of the radio resource control layer. The MG includes parameters such as period, offset, and duration as shown below. A term "period" may be read as a term "periodicity".

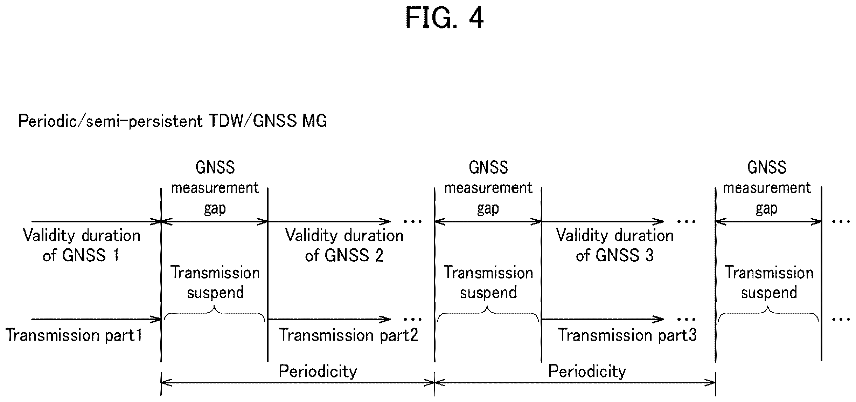

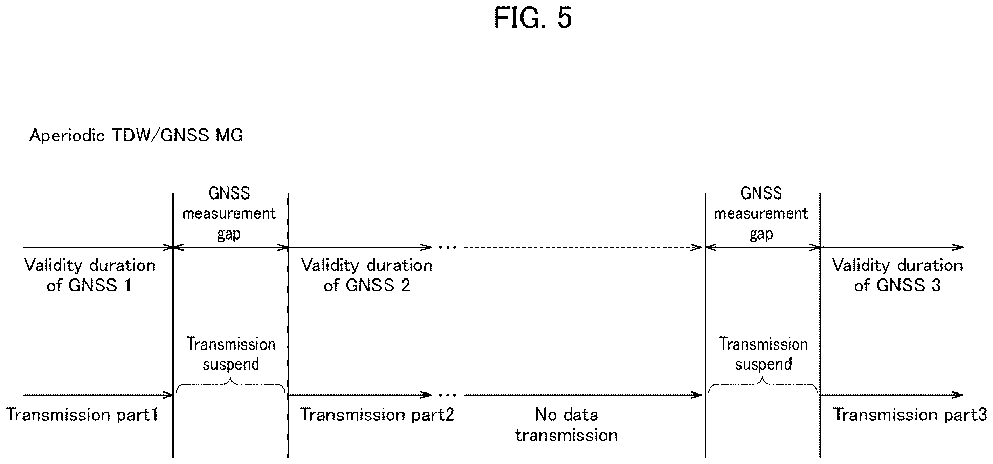

The MG may be configured as a periodic/semi-persistent time resource as shown in FIG. 4. In this case, the period of the MG may be configured based on the validity duration of the position information of the UE 200, assistance information which will be described later, a transmission condition, and the like. Similarly to the validity duration of the position information of the UE 200, the period of the MG may be 10 s, 20 s, 30 s, 40 s, 50 s, 60 s, 5 min, 10 min, 15 min, 20 min, 25 min, 30 min, 60 min, 90 min, 120 min, or infinity, for example. Meanwhile, the MG may be indicated in an aperiodic manner as shown in FIG. 5.

The MG may be configured to the type of a time domain (that is, a periodic/semi-persistent/aperiodic) by different control signals. A periodic MG may be configured by RRC, a semi-persistent MG may be configured by RRC and activated by MAC CE, and an aperiodic may be configured by RRC MG and indicated by DCI, for example.

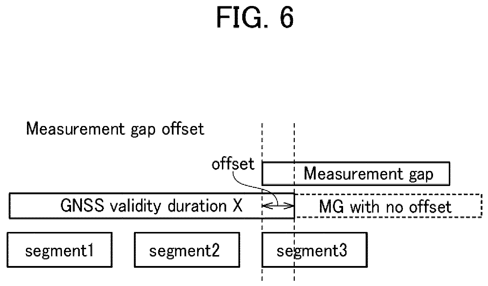

An MG offset may be configured or indicated. An offset specified in 3GPP TS 38.331 section 5.5.2.9 may be applied, for example. That is, a predetermined time offset may be applied to the MG at a predetermined timing based on the configuration or indication of the MG offset, and the start timing of UL transmission by the UE 200 may be aligned with the start timing of the MG. Since UL transmission is not performed in the MG, the offset may be performed up to a cutline of a segment as shown in FIG. 6, for example. As a result, there is no possibility that UL transmission is interrupted in the middle of the segment. In this case, the MG overlaps with the validity duration of the position information of the UE 200, but the MG has priority and UL transmission is not performed when the validity duration overlaps with the MG. The number of subframes/slots/symbols of the offset may be configured by the base station 100.

The duration of the MG may be configured according to capability information of the UE such as UE Capability.

The period/offset/duration of the MG described above may be configured by different control signals. The period and duration may be configured by RRC, and the offset may be indicated by DCI, for example. Further, a plurality of MGs with different periods/offsets/durations may be configured by RRC, and a period/offset/duration of any of the MGs may be activated/indicated by MAC CE/DCI.

The configuration or indication of the MG may be requested by the UE 200. That is, the base station 100 may configure or indicate the MG based on the request from the UE 200.

The request for the configuration or indication of the MG made by the UE 200 may be performed in a periodic/semi-persistent/aperiodic manner.

The request for the configuration or indication of the MG made by the UE 200 may be performed by control signals such as RRC/MAC CE/Uplink Control Information (UCI). Further, the request may be performed by different control signals according to a periodic/semi-persistent/aperiodic.

The request for the configuration or indication of the MG made by the UE 200 may be as follows.

### • Opt 1 (1-bit request)

The request for the configuration or indication of the MG may be associated with the period/offset/duration of the MG. Prior to this, the base station 100 may provide a configuration parameter of one MG to the UE 200.

### • Opt 2 (Request with indication of which MG configuration)

The base station 100 provides configuration parameters of a plurality of MGs to the UE 200, and the UE 200 may request the configuration or indication of one of the MGs (The UE 200 indicates an index of the MG, for example).

### • Opt 3 (Request with concrete parameters)

The request for the configuration or indication of the MG may be the request for a specific value such as the type of the period/offset/duration/time domain of the MG (that is, a periodic/semi-persistent/aperiodic). The period may have a candidate value which is the same as a value of the validity duration of the GNSS, for example. The duration may be requested based on UE capability, for example.

In the configuration or indication of the MG, different parameters (for example, period/offset/duration) may be requested by different control signals.

The request for the configuration or indication of the MG made by the UE 200 may be triggered under the following conditions:
- Alt 1 A periodic timer is configured and the request is triggered by the expiration of the timer.
- Alt 2 When a Radio Link Failure (RLF) occurs, the request is triggered.
- Alt 3 When the position information of the UE 200 or assistance information, which will be described later, becomes more than a threshold value and changes, the request is triggered.

In a case of Alt 2, the UE 200 may report, to the base station 100, a validity duration of updated position information of the UE 200 together with the request for the configuration or indication of the MG.

A description will be given below regarding handling of one or more segments of UL transmission when the MG overlaps with the segments of UL transmission by the UE 200. As has been described for the case of offsetting the MG, the MG has priority over the validity duration of the position information of the UE 200. That is, the MG has priority over UL transmission performed during the validity duration of the position information of the UE 200. As a result, when UL transmission is scheduled in the MG, the UL transmission is not performed. A description will be given regarding handling of the segments of UL transmission which has not been performed due to the segments overlapping with the MG.

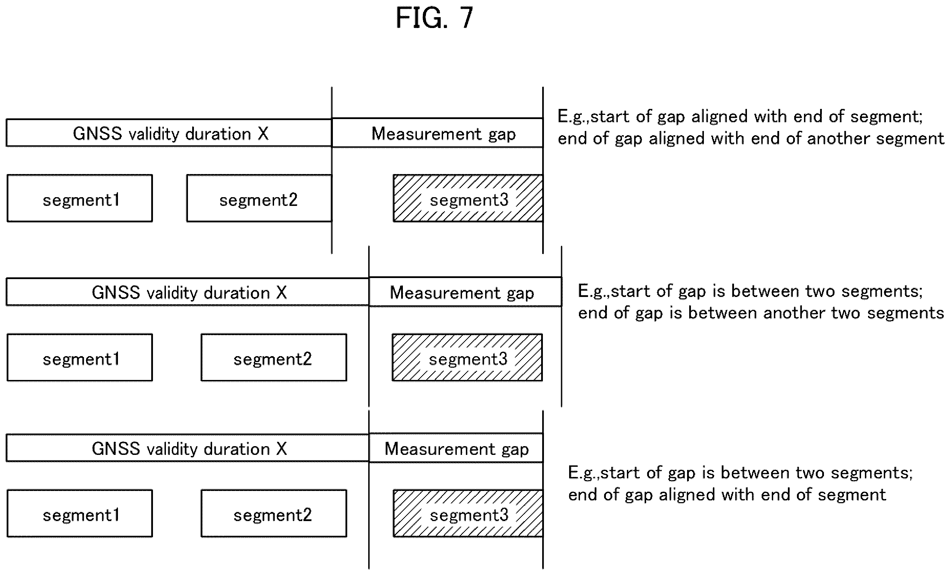

As shown in FIG. 7, when the MG overlaps with a segment of UL transmission, the MG overlaps with the entire segment, and the entire segment that overlaps with the MG is discarded. In this case, the UE 200 does not expect that only a part of the segment overlaps with the MG and is discarded. That is, the UE 200 expects that the configuration of the MG is made in consideration of the start timing and transmission duration of UL transmission. A term "discard" may mean that UL transmission is not performed in the MG, UL transmission is not performed even after the MG, or that transmission is performed after the MG.

In this case, the duration of the MG may be configured from the end of a certain segment to the end of another segment (see upper diagram in FIG. 7). Further, the duration of the MG may be configured from between two segments to between other two segments (see middle diagram in FIG. 7). Still further, the duration of the MG may be configured from between two segments to the end of another segment (see lower diagram in FIG. 7).

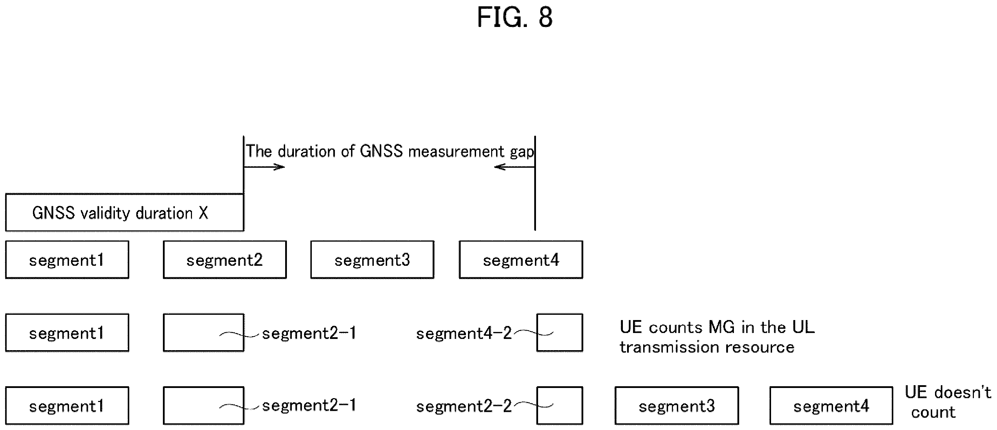

As shown in FIG. 8, when the MG overlaps with part of segments of UL transmission, the part of the segments that overlaps with the MG is discarded or postponed. If the part of the segments is discarded, the UE 200 counts the part of the segments overlapping with the MG (or corresponding slots) as the number of transmissions. If the part of the segments is postponed, the UE 200 does not count the part of the segments overlapping with the MG (or corresponding slots) as the number of transmissions. A term "postpone" means that a signal which is not transmitted in the MG is transmitted after the MG.

If the part of the segments is discarded due to overlapping with the MG,
- discarding may be configured in a periodic/semi-persistent/aperiodic manner,
- discarding may be configured/activated/indicated by RRC/MAC CE/DCI,
- the number of slots to be discarded may be configured in advance or configured by the base station 100,
- a period for indicating discarding may be configured in advance such as every 2 segments or every 3 segments, or may be configured by the base station 100, and
- the start of discarding may be configured in advance such as when a discarding indication is received, or may be configured by the base station 100.

If the part of the segments is postponed due to overlapping with the MG,
- the MG may be configured in a periodic/semi-persistent/aperiodic manner,
- the MG may be configured/activated/indicated by RRC/MAC CE/DCI,
- a duration of the MG (number of slots) may be configured in advance or may be configured by the base station 100,
- a period of the MG may be configured in advance such as every 2 segments or every 3 segments, or may be configured by the base station 100, and
- the start of the MG may be configured in advance such as when an indication of the MG is received, or may be configured by the base station 100.

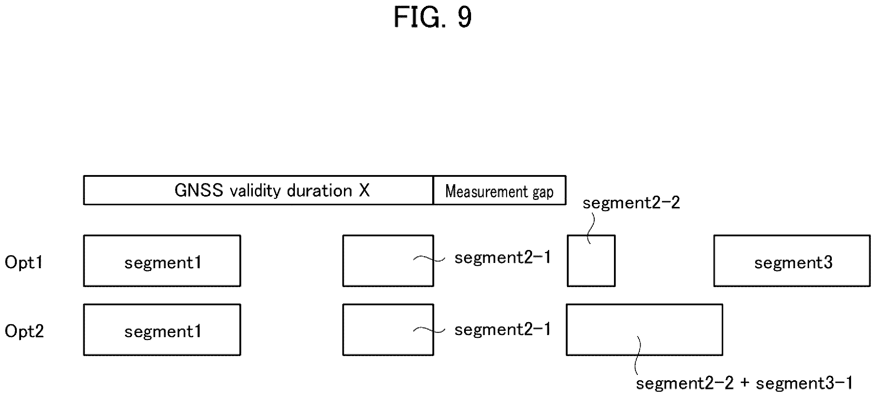

Further, when the part of the segments is postponed due to overlapping with the MG, a duration of a segment to be UL transmitted after the MG (number of slots) may be specified as shown in FIG. 9, for example. It is assumed that one segment has 10 slots, and ninth and tenth slots are postponed.
- Opt 1 The ninth and tenth slots to be UL transmitted after the MG are considered as a next segment (segment2-2 in FIG. 9).
- Opt 2 Ninth to eighteenth slots to be UL transmitted after the MG are considered as a next segment (segment2-2+segment3-1 in FIG. 9).

The handling of a segment of UL transmission that has not been performed due to overlapping with the MG is described above. However, this kind of handling may be applied when the MG configuration and UL transmission scheduling are performed independently, and the overlap between the MG and UL transmission occurs. Meanwhile, in order to apply this kind of handling, an MG may be configured first and then UL transmission scheduling may be performed in accordance with the MG.

### (Assistance information)

The control signal and reference signal processing unit 240 acquires assistance information. Specifically, the control signal and reference signal processing unit 240 acquires assistance information from a sensor (not shown), etc., mounted in the UE 200.

The assistance information is information on a movement of the UE 200. Specifically, the assistance information may include at least one of a movement speed of the UE 200, the amount of change in the movement speed of the UE 200, a derivative of the amount of change in the movement speed of the UE 200, and a movement trajectory of the UE 200. The assistance information to be acquired (or assistance information to be transmitted to the base station 100 as described later) may be predetermined, or may be configured or indicated by the base station 100. In the latter case, the base station 100 may request the UE 200 to transmit the assistance information.

The assistance information may be a value itself acquired by the control signal and reference signal processing unit 240, a predicted value calculated from a value acquired by the control signal and reference signal processing unit 240, a value corresponding to a predetermined time interval, or a value corresponding to a predetermined timing.

An acquisition time of the assistance information may be specified as follows.
- It is explicitly reported by the UE 200. An SFN and/or subframe number are signaled, for example.
- It is implicitly determined as a transmission time (report time) of the UE 200
- It is implicitly determined as a reception time of the base station 100

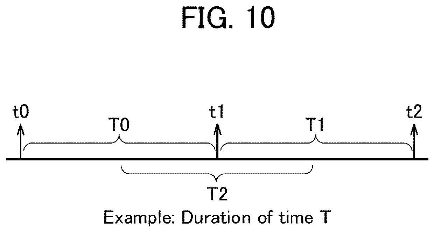

The predicted value is a predicted value in a duration configured to include the acquisition time of the assistance information. As shown in FIG. 10, when the acquisition time of the assistance information is t1, a reference duration for calculating the predicted value may be a duration T0 from t1 to to in the past, a duration T1 from t1 to t2 in the future, or a duration T2 including t1 in the past and future, for example.

Similarly to the position information of the UE 200, the validity duration may be configured for the assistance information. The validity duration of the assistance information may be configured by the UE 200 or may be configured by the base station 100. The control signal and reference signal processing unit 240 may re-acquire the assistance information based on the validity duration. The validity duration may be 10 s, 20 s, 30 s, 40 s, 50 s, 60 s, 5 min, 10 min, 15 min, 20 min, 25 min, 30 min, 60 min, 90 min, 120 min, or infinity, for example.

The start timing of the validity duration configured for the assistance information may be as follows.
- It is explicitly reported by the UE 200. An SFN and/or subframe number are signaled, for example.
- It is implicitly determined as a transmission time (report time) of the UE 200.
- It is implicitly determined as N slots/ms/s/min from a transmission time (report time) of the UE 200.
- It is implicitly determined as a reception time of the base station 100.

The length of the validity duration configured for the assistance information may be configured as follows.
- It may be explicitly reported by the UE 200. It may be configured in advance. It may be configured by a parameter of a higher layer.
- It may be configured to be the same as or different from the validity duration of the position information of the UE 200.

The assistance information may be transmitted to the base station 100 by a control signal such as RRC/MAC CE/UCI.

The assistance information may be transmitted from the UE 200 to the base station 100 at the following timings.
- Alt 1 After initial access.
- Alt 2 When a periodic timer is configured and trigger is performed by the expiration of the timer.
- Alt 3 When the assistance information is changed.
- Alt 4 When configured/activated/indicated by network configuration signaling.
- Alt 5 N symbol/slot/ms/s before the expiration of the validity duration of the position information of the UE 200.

The assistance information is information for updating the position information of the UE 200. This can update the position information of the UE 200, even when it is not possible to receive a radio signal from the satellite positioning system S and to re-acquire the position information of the UE 200 based on the radio signal, such as when the MG is not configured.

The base station 100 may update the position information of the UE 200. In this case, the radio signal transmission and reception unit 210 transmits the position information of the UE 200 and the assistance information to the base station 100. The base station 100 updates the position information of the UE 200 based on the assistance information and transmits the updated position information of the UE 200 to the UE 200. As a result, the UE 200 and the base station 100 can share the updated position information of the UE 200.

The position information of the UE 200 may be updated a plurality of times. In this case, the validity duration may be configured for each of pieces of updated position information of the UE 200. It is preferable to update the position information a plurality of times, such as when the validity duration is not sufficiently long.

The updated position information of the UE 200 may be transmitted by a control signal such as RRC/MAC CE/DCI.

The UE 200 may expect to receive the updated position information of the UE 200 in the following cases.
- Alt 1 N symbols/slot/ms/m before the validity duration of the position information of the UE 200 expires.
- Alt 2 N symbols/slot/ms/m after the UE 200 transmits an update request.
- Alt 3 N symbols/slot/ms/m after the UE 200 transmits the assistance information.
- Alt 4 Before a timer is configured and the timer expires.

Meanwhile, the control signal and reference signal processing unit 240 may update the position information of the UE 200. In this case, the radio signal transmission and reception unit 210 may transmit the updated position information of the UE 200 or the assistance information to the base station 100. As a result, the UE 200 and the base station 100 can share the updated position information of the UE 200. Capability information of the UE 200, such as UE Capability, may be defined such that the position information of the UE 200 can be derived from at least one of pieces of information described below.
- The validity duration of the position information of the UE 200
- Time required to acquire the position information of the UE 200
- A speed parameter of the UE 200
- A movement trajectory of the UE 200

The encoding/decoding unit 250 performs data division/connection and channel coding/decoding, and the like for each predetermined communication destination (base station 100 or other base stations).

Specifically, the encoding/decoding unit 250 divides data output from the data transmission and reception unit 260 into a predetermined size, and performs channel coding on the divided data. Further, the encoding/decoding unit 250 decodes the data output from the modulation and demodulation unit 230 and connects the decoded data.

The data transmission and reception unit 260 transmits and receives data such as a Protocol Data Unit (PDU)/a Service Data Unit (SDU) to and from the base station 100. The data transmission and reception unit 260 may constitute a transmitting unit that transmits data and a receiving unit that receives data.

Specifically, the data transmission and reception unit 260 performs assembly/disassembly and the like of PDUs/SDUs in a plurality of layers (a medium access control layer, a radio link control layer, a packet data convergence protocol layer, and the like). Further, the data transmission and reception unit 260 performs data error correction and re-transmission control based on a Hybrid Automatic Repeat Request (HARQ).

The control unit 270 controls individual functional blocks which constitute the UE 200. That is, it can be said that functions of control units recited in claims are implemented by each functional block constituting the UE 200, such as the control signal and reference signal processing unit 240 of the embodiment.

### (3) Operation of radio communication system

An operation of the radio communication system 10 will be described. Specifically, a description will be given regarding an operation of re-acquiring the position information of the UE 200 and an operation of updating the position information of the UE 200 based on the assistance information.

### (3.1) Issue

### (3.1.1) Issue 1

There is a problem of how to receive a radio signal from the satellite positioning system and to update the position information of the UE in a connection state of a radio resource control layer which is a prerequisite for UL transmission.

### (3.1.2) Issue 2

The UE needs to receive a radio signal from the satellite positioning system and to update the position information of the UE in the connection state of the radio resource control layer which is a prerequisite for UL transmission. In this case, it is necessary to temporarily interrupt UL transmission. There is a problem of how to handle a segment of the interrupted UL transmission.

### (3.1.3) Issue 3

There is a problem that the power consumption of the UE increases by receiving a radio signal from the satellite positioning system and updating the position information of the UE.

### (3.2) Operation example

### (3.2.1) Operation Example 1

The control signal and reference signal processing unit 240 configures the MG in the connection state of the radio resource control layer. In the MG, the radio signal transmission and reception unit 210 receives a radio signal from the satellite positioning system S. The control signal and reference signal processing unit 240 updates the position information of the UE 200 based on the radio signal.

The validity duration may be configured for the position information of the UE 200. During the validity duration, the radio signal transmission and reception unit 210 can perform UL transmission. Meanwhile, the radio signal transmission and reception unit 210 is not able to perform UL transmission during a duration in which the MG is configure, even in the validity duration of the position information of the UE 200. The MG may be configured with an offset in consideration of UL transmission scheduling. The MG may be configure based on a request from the UE 200.

### (3.2.2) Operation Example 2

In Operation Example 1 described above, if UL transmission scheduling overlaps with the MG, a segment of the UL transmission may be discarded. That is, the scheduled UL transmission is not performed even after the MG. Meanwhile, UL transmission scheduled after the MG may be performed without discarding the segment of the UL transmission.

### (3.2.3) Operation Example 3

The control signal and reference signal processing unit 240 acquires the position information of the UE 200 based on a radio signal from the satellite positioning system S received by the radio signal transmission and reception unit 210. The radio signal transmission and reception unit 210 transmits the position information of the UE 200 to the base station 100. The control signal and reference signal processing unit 240 acquires the assistance information which is information on the movement of the UE 200. The radio signal transmission and reception unit 210 transmits the assistance information to the base station 100. The base station 100 updates the position information of the UE 200 based on the assistance information, and transmits the updated position information of the UE 200 to the UE 200.

The assistance information may include at least one of a movement speed of the UE 200, the amount of change in the movement speed of the UE 200, a derivative of the amount of change in the movement speed of the UE 200, and a movement trajectory of the UE 200. Further, the assistance information may be a value itself acquired by the control signal and reference signal processing unit 240, or a predicted value calculated from a value acquired by the control signal and reference signal processing unit 240. Still further, the assistance information may be re-acquired based on the validity duration of the assistance information.

### (3.2.4) Operation Example 4

In Operation Example 3 described above, the radio signal transmission and reception unit 210 may not transmit the assistance information to the base station 100. In this case, the control signal and reference signal processing unit 240 updates the position information of the UE 200 based on the assistance information. Further, the updated position information of the UE 200 may be transmitted to the base station 100 by the radio signal transmission and reception unit 210.

### (4) Action and effect

The UE 200 of the embodiment described above can configure the MG for receiving a radio signal from the satellite positioning system in the connection state of the radio resource control layer which is a prerequisite for UL transmission. As a result, the position information of the UE 200 can be updated in the connection state of the radio resource control layer.

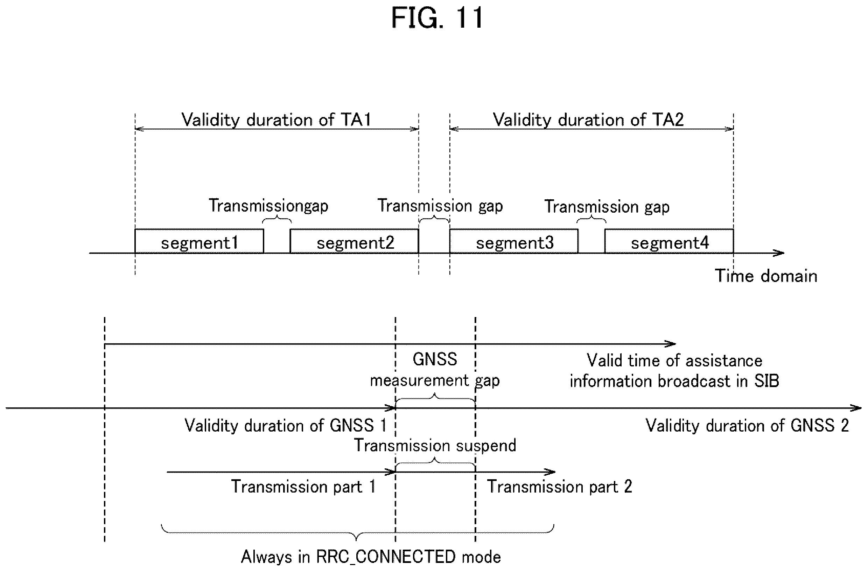

As shown in FIG. 11, 3GPP Release 17 specifies that a Transmission gap is disposed between segments of UL transmission. Meanwhile, if the time regarding UL transmission by the UE becomes long, such as in the case of IoT-NTN, a duration of the Transmission gap is not sufficient. Therefore, the UE 200 of the embodiment newly configures an MG. As a result, even if the time regarding UL transmission by the UE becomes long, a radio signal can be received from the satellite positioning system S in the MG, and this can update the position information of the UE 200.

In addition, the UE 200 of the embodiment described above can configure the MG with an offset. As a result, UL transmission scheduling can be considered.

In addition, the UE 200 of the embodiment described above can request the base station 100 to configure or indicate the MG. As a result, the MG can be configured or indicated on the UE 200 side.

Further, when the MG overlaps with a segment of UL transmission, the UE 200 of the embodiment described above can assume that the entire segment overlaps with the MG and may not transmit the segment. Still further, when the MG overlaps with a segment of UL transmission, the UE 200 of the embodiment described above may not transmit or postpone an overlapping portion of the segment. In this way, the segment of UL transmission overlapping with the MG can be handled flexibly.

The UE 200 of the embodiment described above can update the position information of the UE 200 based on the assistance information which is information on the movement of the UE 200. As a result, since a radio signal is not received from the satellite positioning system S to update the position information of the UE 200, the power consumption of the UE 200 can be suppressed.

Further, the assistance information of the embodiment described above can include at least one of a movement speed of the UE 200, the amount of change in the movement speed of the UE 200, a derivative of the amount of change in the movement speed of the UE 200, and a movement trajectory of the UE 200. This can update the position information of the UE 200 with high accuracy.

Further, the assistance information of the embodiment described above may be a predicted value during a duration including the acquisition time. This can update the position information of the UE 200 with high accuracy, such as a case the movement of the UE 200 can be expressed as a function.

Further, the assistance information of the embodiment described above may be re-acquired based on the validity duration of the assistance information. As a result, since the position information of the UE 200 is frequently updated, the accuracy of UL transmission can be enhanced.

Further, the UE 200 of the embodiment described above can update the position information of the UE 200 even when the UE 200 does not transmit the assistance information to the base station 100. This can suppress power consumption for transmission of the assistance information.

Further, the UE 200 of the embodiment described above can transmit the updated position information of the UE 200 to the base station 100. As a result, even if the assistance information is not transmitted to the base station 100, the update position information of the UE 200 can be shared between the UE 200 and the base station 100.

### (5) Other embodiments

Although the contents of the present invention have been described above in accordance with the embodiment, it is obvious to those skilled in the art that the present invention is not limited to the descriptions, and that various modifications and improvements are possible.

In the above disclosure, it is assumed that the UE 200 of the embodiment is applied to an IoT-NTN, but the present invention is not limited thereto. The UE 200 may be applied to an NR NTN, or the UE 200 may be applied not only to the NTN but also to a Terrestrial Network (TN), for example.

In the above disclosure, it is assumed that when a part of a segment of UL transmission overlaps with the MG, the part of the segment is postponed, but the present invention is not limited thereto. When an entire segment of UL transmission overlaps with the MG, the entire segment may be postponed, for example.

The operation examples described above may be combined and applied in a complex manner as long as there are no contradictions. Even when Operation Example 1 or 2 and Operation Example 3 or 4 are combined and the MG is configured, the position information of the UE 200 may be updated based on the assistance information, for example.

In the above disclosure, terms such as configure, activate, update, indicate, enable, specify, and select may be read interchangeably. Similarly, terms such as link, associate, correspond, and map may be read interchangeably, and terms such as allocate, assign, monitor, and map may be read interchangeably.

In addition, terms such as specific, dedicated, UE-specific, and UE-dedicated may be read interchangeably. Similarly, terms such as common, shared, group-common, UE-common, and UE-shared may be read interchangeably.

The functional block diagram that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining software into the apparatus described above or the plurality of apparatuses described above.

Functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but the functions are by no means limited to these. For example, a functional block (component) to implement a function of transmission may be referred to as a "transmitting section (transmitting unit)," a "transmitter". The method for implementing each component is not particularly limited as described above.

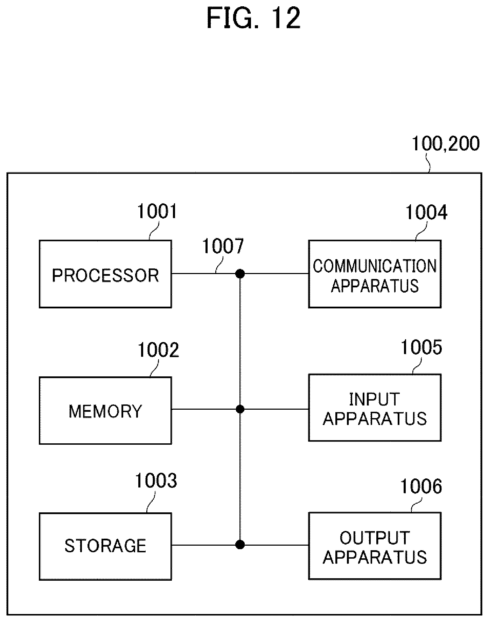

Furthermore, the above-described base station 100 and UE 200 (the apparatus) may function as a computer that executes the processes of the radio communication method of the present disclosure. FIG. 12 is a diagram to show an example of a hardware structure of the apparatus. As shown in FIG. 12, the apparatus may each be formed as a computer apparatus that includes a processor 1001, a memory 1002, a storage 1003, a communication apparatus 1004, an input apparatus 1005, an output apparatus 1006, a bus 1007, and so on.

Note that in the following description, the word such as an apparatus can be read as a circuit, a device, a section, a unit, and so on. The hardware structure of the apparatus may be configured to include one or more of apparatuses shown in the drawings, or may be configured not to include part of apparatuses.

Each function of the apparatus is implemented by one of hardware elements or the combination of the hardware elements in the computer apparatus.

Each function of the apparatus is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. The above-described various processes may be performed by a single processor 1001, or may be performed by two or more processors 1001 simultaneously or sequentially. The processor 1001 may be implemented by one or more chips. It should be noted that the program may be transmitted from a network via a telecommunication line.

The memory 1002 is a computer-readable recording medium, and may be constituted with, for example, at least one of a Read Only Memory (ROM), an Erasable Programmable ROM (EPROM), an Electrically Erasable Programmable ROM (EEPROM), a Random Access Memory (RAM), and so on. The memory 1002 may be referred to as a "register," a "cache," a "main memory (primary storage apparatus)" and so on. The memory 1002 can store executable programs (program codes), software modules, and the like for implementing the method according to one embodiment of the present disclosure.

The storage 1003 is a computer-readable recording medium, and may be constituted with, for example, at least one of a compact disc (Compact Disc ROM (CD-ROM) and so on), a hard disk drive, a flexible disk, a magneto-optical disk (for example, a compact disc, a digital versatile disc, a Blu-ray (registered trademark) disk), a smart card, a flash memory device (for example, a card, a stick, and a key drive), a floppy (registered trademark) disk, a magnetic stripe, and so on. The storage 1003 may be referred to as "auxiliary storage apparatus." The above recording medium may be a database including at least one of the memory 1002 and the storage 1003, a server, or any other appropriate medium.

The communication apparatus 1004 is hardware (transmitting/receiving device) for allowing inter-computer communication via at least one of wired and wireless networks, and may be referred to as, for example, a "network device," a "network controller," a "network card," a "communication module," and so on.

The communication apparatus 1004 may be configured to include a high frequency switch, a duplexer, a filter, a frequency synthesizer, and so on in order to realize, for example, at least one of frequency division duplex (FDD) and time division duplex (TDD).

The input apparatus 1005 is an input device that receives input from the outside (for example, a keyboard, a mouse, a microphone, a switch, a button, a sensor, and so on). The output apparatus 1006 is an output device that performs output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, pieces of apparatus, including the processor 1001, the memory 1002, and others, are connected by a bus 1007 for communicating information. The bus 1007 may be formed with a single bus, or may be formed with buses that vary between pieces of apparatus.

Also, the apparatus may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

Notification of information is by no means limited to the aspects/embodiments described in the present disclosure, and other methods may be used as well. For example, notification of information may be implemented by using physical layer signaling (for example, downlink control information (DCI), uplink control information (UCI)), higher layer signaling (for example, RRC signaling, Medium Access Control (MAC) signaling), broadcast information (master information block (MIB), system information block (SIB)), and other signals or combinations of these. Also, RRC signaling may be referred to as an "RRC message," and can be, for example, an RRC connection setup message, an RRC connection reconfiguration message, and so on.

The aspects/embodiments illustrated in the present disclosure may be applied to at least one of Long Term Evolution (LTE), LTE-Advanced (LTE-A), SUPER 3G, IMT-Advanced, 4th generation mobile communication system (4G), 5th generation mobile communication system (5G), Future Radio Access (FRA), New Radio (NR), New radio access (NX), W-CDMA (registered trademark), GSM (registered trademark), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate systems, next-generation systems that are enhanced based on these. A plurality of systems may be combined (for example, a combination of at least one of LTE and LTE-A, and 5G, and the like) for application.

The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

Specific operations which have been described in the present disclosure to be performed by a base station may, in some cases, be performed by an upper node thereof. **In** a network including one or a plurality of network nodes with the base station, it is clear that various operations that are performed to communicate with a terminal can be performed by the base station and other network nodes (for example, Mobility Management Entities (MMEs), Serving-Gateways (S-GWs), and so on may be possible, but these are not limiting) other than the base station, or combinations of these. According to the above, a case is described in which there is a single network node other than the base station. However, a combination of multiple other network nodes may be considered (e.g., MME and S-GW).

The information or signals may be output from a higher layer (or lower layer) to a lower layer (or higher layer). The information or signals may be input or output through multiple network nodes.

The input or output information may be stored in a specific location (e.g., memory) or managed using management tables. The input or output information may be overwritten, updated, or added. The information that has been output may be deleted. The information that has been input may be transmitted to another apparatus.

A determination may be realized by a value (0 or 1) represented by one bit, by a boolean value (true or false), or by comparison of numerical values (e.g., comparison with a predetermined value).

Each aspect/embodiment described in the present disclosure may be used independently, may be used in combination, or may be used by switching according to operations. Further, notification of predetermined information (e.g., notification of "X") is not limited to an explicit notification, and may be performed by an implicit notification (e.g., by not performing notification of the predetermined information).

Software should be broadly interpreted to mean, regardless of whether referred to as software, firmware, middle-ware, microcode, hardware description language, or any other name, instructions, instruction sets, codes, code segments, program codes, programs, subprograms, software modules, applications, software applications, software packages, routines, subroutines, objects, executable files, executable threads, procedures, functions, and the like.

Further, software, instructions, information, and the like may be transmitted and received via a transmission medium. For example, in the case where software is transmitted from a website, server, or other remote source using at least one of wired line technologies (such as coaxial cable, fiber optic cable, twisted pair, digital subscriber line (DSL), etc.) and wireless technologies (infrared, microwave, etc.), at least one of these wired line technologies or wireless technologies is included within the definition of the transmission medium.

Information, a signal, or the like, described in the present disclosure may be represented by using any one of various different technologies. For example, data, an instruction, a command, information, a signal, a bit, a symbol, a chip, or the like, referred to throughout the above description, may be represented by a voltage, an electric current, electromagnetic waves, magnetic fields, a magnetic particle, optical fields, a photon, or a combination thereof.

It should be noted that a term described in the present disclosure and/or a term required for understanding of the present disclosure may be replaced by a term having the same or similar meaning. For example, a channel and/or a symbol may be a signal (signaling). Further, a signal may be a message. Further, the component carrier (CC) may be referred to as a carrier frequency, cell, frequency carrier, or the like.

As used in the present disclosure, the terms "system" and "network" are used interchangeably.

Further, the information, parameters, and the like, described in the present disclosure may be expressed using absolute values, relative values from predetermined values, or they may be expressed using corresponding different information. For example, a radio resource may be what is indicated by an index.

The names used for the parameters described above are not used as limitations. Further, the mathematical equations using these parameters may differ from those explicitly disclosed in the present disclosure. Because the various channels (e.g., PUCCH, PDCCH) and information elements may be identified by any suitable names, the various names assigned to these various channels and information elements are not used as limitations.

In the present disclosure, the terms such as a "base station (BS)," a "radio base station," a "fixed station," a "NodeB," an "eNodeB (eNB)," a "gNodeB (gNB)," an "access point," a "transmission point," a "reception point," a "transmission/reception point," a "cell," a "sector," a "cell group," a "carrier," a "component carrier," and so on can be used interchangeably. A base station may be referred to as the terms such as a "macro cell," a "small cell," a "femto cell," a "pico cell," and so on.

A base station can accommodate one or a plurality of (for example, three) cells (which may be referred to as sectors). When a base station accommodates a plurality of cells, the entire coverage area of the base station can be partitioned into multiple smaller areas, and each smaller area can provide communication services through base station subsystems (for example, indoor small base stations (Remote Radio Heads (RRHs))).

The term "cell" or "sector" refers to part of or the entire coverage area of at least one of a base station and a base station subsystem that provides communication services within this coverage.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases by the skilled person in the art.

At least one of a base station and a mobile station may be referred to as a "transmitting apparatus," a "receiving apparatus," a "communication apparatus," and so on. Note that at least one of a base station and a mobile station may be a device mounted on a moving object or a moving object itself, and so on. The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

Furthermore, a base station in the present disclosure may be interpreted as a mobile station (user terminal, hereinafter the same). For example, each aspect/embodiment of the present disclosure may be applied to the structure that replaces a communication between a base station and a mobile station with a communication between a plurality of mobile stations (for example, which may be referred to as "Device-to-Device (D2D)," "Vehicle-to-Everything (V2X)," and the like). In this case, the mobile station may have the functions of the base station described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, a mobile station in the present disclosure may be interpreted as a base station. In this case, the base station may have the functions of the mobile station described above.

A radio frame may be constituted of one or a plurality of frames in the time domain. Each of one or a plurality of frames may be referred to as a "subframe" in the time domain.

Furthermore, a subframe may be constituted of one or a plurality of slots in the time domain. A subframe may be a fixed time length (for example, 1 ms) independent of numerology.

Numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of the number of symbols less than a slot. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms.

For example, one subframe may be referred to as a "TTI," a plurality of consecutive subframes may be referred to as a "TTI," or one slot or one mini-slot may be referred to as a "TTI." In other words, at least one of a subframe and a TTI may be a subframe (1 ms) in existing LTE, may be a period shorter than 1 ms (for example, 1 to 13 symbols), or may be a period longer than 1 ms. Note that a unit expressing TTI may be referred to as a "slot," a "mini-slot," or the like, instead of a "subframe."

Here, a TTI refers to the minimum time unit of scheduling in radio communication, for example. For example, in LTE systems, a base station performs, for user terminals, scheduling of allocating radio resources (such as a frequency bandwidth and transmit power available for each user terminal) in TTI units. Note that the definition of the TTI is not limited to this.

The TTI may be a transmission time unit for channel-encoded data packets (transport blocks), code blocks, codewords, or the like, or may be a unit of processing in scheduling, link adaptation, or the like. Note that, when a TTI is given, a time interval (for example, the number of symbols) to which transport blocks, code blocks, codewords, or the like are actually mapped may be shorter than the TTI.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI," a "normal subframe," a "long subframe," a "slot," or the like. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, or the like) may be interpreted as a TTI having a time length exceeding 1 ms, and a short TTI (for example, a shortened TTI or the like) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

An RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may be a radio resource field of one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for UL) and a DL BWP (BWP for DL). One or a plurality of BWPs may be configured in one carrier for a UE.

At least one of configured BWPs may be active, and a UE may not need to assume to transmit/receive a certain signal/channel outside the active BWP(s). Note that a "cell," a "carrier," and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

The term "connected" or "coupled" or any variation thereof means any direct or indirect connection or connection between two or more elements and may include the presence of one or more intermediate elements between the two elements "connected" or "coupled" with each other. The coupling or connection between the elements may be physical, logical, or a combination thereof. For example, "connection" may be read as "access". As used in the present disclosure, the two elements may be thought of as being "connected" or "coupled" to each other using at least one of one or more wires, cables, and printed electrical connections and, as a number of non-limiting and non-inclusive examples, electromagnetic energy having wavelengths in the radio frequency region, the microwave region, and the light (both visible and invisible) region.

A reference signal may be abbreviated as an "RS," and may be referred to as a "pilot", depending on which standard is applied.

The phrase "based on" as used in the present disclosure does not mean "based only on", unless otherwise specified. In other words, the phrase "based on" means both "based only on" and "based at least on".

"Means" included in the configuration of each of the above apparatuses may be replaced by "parts", "circuits", "devices", etc.

Reference to elements with designations such as "first," "second," and so on used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

**In** the case where the terms "include", "including" and variations thereof are used in the present disclosure, these terms are intended to be comprehensive in the same way as the term "comprising". Further, the term "or" used in the present disclosure is not intended to be an "exclusive or".

**In** the present disclosure, in the case where an article is added by translation, for example "a", "an", and "the", the disclosure may include that the noun following these articles is plural.

As used in the present disclosure, the term "determining" may encompasses a wide variety of actions. For example, "determining" may be regarded as determining to have performed judging, calculating, computing, processing, deriving, investigating, looking up (looking up, search, inquiry) (e.g., looking up in a table, a database or another data structure), ascertaining and the like. Also, "determining" may be regarded as determining to have performed receiving (e.g., receiving information), transmitting (e.g., transmitting information), inputting, outputting, accessing (e.g., accessing data in a memory) and the like. Also, "determining" may be regarded as determining to have performed resolving, selecting, choosing, establishing, comparing and the like. That is, "determining" may be regarded as determining to have performed some action. Moreover, "determining" may be read as "assuming", "expecting", "considering", and the like.

**In** this disclosure, the term "A and B are different" may mean "A and B are different from each other." It should be noted that the term "A and B are different" may mean "A and B are different from C." Terms such as "separated" or "combined" may be interpreted in the same way as the "different".

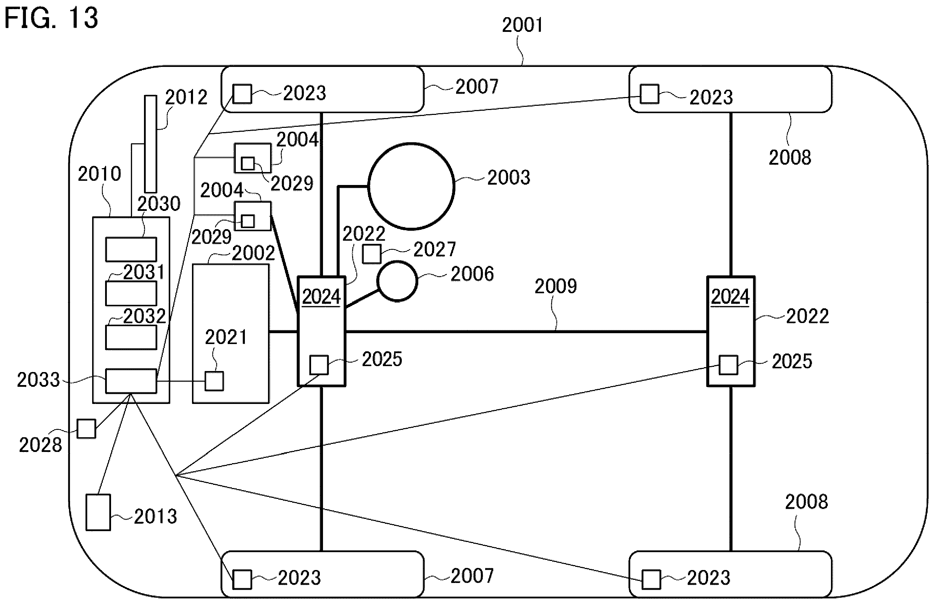

Fig. 13 shows an example of a configuration of a vehicle 2001. As shown in Fig. 13, the vehicle 2001 includes a drive unit 2002, a steering unit 2003, an accelerator pedal 2004, a brake pedal 2005, a shift lever 2006, left and right front wheels 2007, left and right rear wheels 2008, an axle 2009, an electronic control unit 2010, various sensors 2021-2029, an information service unit 2012, and a communication module 2013.

The drive unit 2002 may include, for example, an engine, a motor, and a hybrid of an engine and a motor.

The steering unit 2003 includes at least a steering wheel and is configured to steer at least one of the front wheel or the rear wheel, based on the operation of the steering wheel operated by the user.

The electronic control unit 2010 includes a microprocessor 2031, a memory (ROM, RAM) 2032, and a communication port (IO port) 2033. The electronic control unit 2010 receives signals from the various sensors 2021-29 provided in the vehicle. The electronic control unit 2010 may be referred to as an ECU (Electronic Control Unit).

The signals from the various sensors 2021 to 2028 include a current signal from a current sensor 2021 which senses the current of the motor, a front or rear wheel rotation signal acquired by a revolution sensor 2022, a front or rear wheel pneumatic signal acquired by a pneumatic sensor 2023, a vehicle speed signal acquired by a vehicle speed sensor 2024, an acceleration signal acquired by an acceleration sensor 2025, an accelerator pedal stepped-on amount signal acquired by an accelerator pedal sensor 2029, a brake pedal stepped-on amount signal acquired by a brake pedal sensor 2026, an operation signal of a shift lever acquired by a shift lever sensor 2027, and a detection signal, acquired by an object detection sensor 2028, for detecting an obstacle, a vehicle, a pedestrian, and the like.

The information service unit 2012 includes various devices for providing (outputting) various kinds of information such as driving information, traffic information, and entertainment information, including a car navigation system, an audio system, a speaker, a television, and a radio, and one or more ECUs controlling these devices. The information service unit 2012 provides various types of multimedia information and multimedia services to the occupants of the vehicle 2001 by using information obtained from the external device through the communication module 2013 or the like.

A driving support system unit 2030 includes: various devices for providing functions of preventing accidents and reducing driver's operating loads such as a millimeter wave radar, a LiDAR (Light Detection and Ranging), a camera, a positioning locator (e.g., GNSS, etc.), map information (e.g., high definition (HD) map, autonomous vehicle (AV) map, etc.), a gyro system (e.g., IMU (Inertial Measurement Unit), INS (Inertial Navigation System), etc.), an AI (Artificial Intelligence) chip, an AI processor; and one or more ECUs controlling these devices. In addition, the driving support system unit 2030 transmits and receives various types of information via the communication module 2013 to realize a driving support function or an autonomous driving function.

The communication module 2013 may communicate with the microprocessor 2031 and components of the vehicle 2001 via a communication port. For example, the communication module 2013 transmits and receives data via a communication port 2033, to and from the drive unit 2002, the steering unit 2003, the accelerator pedal 2004, the brake pedal 2005, the shift lever 2006, the left and right front wheels 2007, the left and right rear wheels 2008, the axle 2009, the microprocessor 2031 and the memory (ROM, RAM) 2032 in the electronic control unit 2010, and the sensors 2021 to 2028 provided in the vehicle 2001.

The communication module 2013 is a communication device that can be controlled by the microprocessor 2031 of the electronic control unit 2010 and that is capable of communicating with external devices. For example, various kinds of information are transmitted to and received from external devices through radio communication. The communication module 2013 may be internal to or external to the electronic control unit 2010. The external devices may include, for example, a base station, a mobile station, or the like.

The communication module 2013 transmits a current signal from a current sensor, which is input to the electronic control unit 2010, to external devices through radio communication. Also, the communication module 2013 transmits to external devices through radio communication, a front or rear wheel rotation signal acquired by a revolution sensor 2022, a front or rear wheel pneumatic signal acquired by a pneumatic sensor 2023, a vehicle speed signal acquired by a vehicle speed sensor 2024, an acceleration signal acquired by an acceleration sensor 2025, an accelerator pedal stepped-on amount signal acquired by an accelerator pedal sensor 2029, a brake pedal stepped-on amount signal acquired by a brake pedal sensor 2026, an operation signal of a shift lever acquired by a shift lever sensor 2027, and a detection signal, acquired by an object detection sensor 2028, for detecting an obstacle, a vehicle, a pedestrian, and the like, which are input to the electronic control unit 2010.

The communication module 2013 receives various types of information (traffic information, signal information, inter-vehicle information, etc.) transmitted from the external devices and displays the received information on the information service unit 2012 provided in the vehicle 2001. **In** addition, the communication module 2013 stores the various types of information received from the external devices in the memory 2032 available to the microprocessor 2031. Based on the information stored in the memory 2032, the microprocessor 2031 may control the drive unit 2002, the steering unit 2003, the accelerator pedal 2004, the brake pedal 2005, the shift lever 2006, the left and right front wheels 2007, the left and right rear wheels 2008, the axle 2009, the sensors 2021-2028, etc., mounted in the vehicle 2001.

### <Notes>

The terminal of the embodiment may be configured as a terminal described in each item below.

### (Item 1)

A terminal including:
a control unit that acquires position information of the terminal based on a radio signal from a satellite positioning system; and
a transmitting unit that transmits the position information to a base station, in which
the control unit acquires assistance information that is information on a movement of the terminal, and
the transmitting unit transmits the assistance information to the base station.

### (Item 2)

The terminal according to claim 1, in which
the assistance information includes at least one of a movement speed of the terminal, a change amount of the movement speed, a derivative of the change amount, and a movement trajectory of the terminal.

### (Item 3)

The terminal according to claim 2, in which
the movement speed of the terminal, the change amount of the movement speed, the derivative of the change amount, and the movement trajectory of the terminal are predicted values in a duration including an acquisition time by the control unit.

### (Item 4)

The terminal according to any one of claims 1 to 3, in which
the assistance information is re-acquired based on a validity duration of the assistance information.

### (Item 5)

A terminal including:
a control unit that acquires position information of a terminal based on a radio signal from a satellite positioning system; and
a transmitting unit that transmits the position information to a base station, in which
the control unit acquires assistance information that is information on a movement of the terminal and updates the position information based on the assistance information.

### (Item 6)

The terminal according to claim 5, in which
the transmitting unit transmits the position information that has been updated to the base station.

As described above, the present disclosure has been described in detail. It is apparent to a person skilled in the art that the present disclosure is not limited to one or more embodiments described in the present disclosure. The present disclosure can be implemented as modifications and variations without departing from the subject matter and the scope of the present disclosure defined by the descriptions of claims. Therefore, the descriptions of the present disclosure are for illustrative purposes only, and are not intended to be any limitations to the present disclosure.

### REFERENCE SIGNS LIST

S Satellite positioning system
10 Radio communication system
20 NG-RAN
100 Base station
150 Flying object
200 UE
210 Radio signal transmission and reception unit
220 Amplifier unit
230 Modulation and demodulation unit
240 Control signal and reference signal processing unit
250 Encoding/decoding unit
260 Data transmission and reception unit
270 Control unit
1001 Processor
1002 Memory
1003 Storage
1004 Communication apparatus
1005 Input apparatus
1006 Output apparatus
1007 Bus
2001 Vehicle
2002 Drive unit
2003 Steering unit
2004 Accelerator pedal
2005 Brake pedal
2006 Shift lever
2007 Left and right front wheels
2008 Left and right rear wheels
2009 Axle
2010 Electronic control unit
2012 Information service unit
2013 Communication module
2021 Current sensor
2022 Rotation speed sensor
2023 Pneumatic sensor
2024 Vehicle speed sensor
2025 Acceleration sensor
2026 Brake pedal sensor
2027 Shift lever sensor
2028 Object detection sensor
2029 Accelerator pedal sensor
2030 Driving support system unit
2031 Microprocessor
2032 Memory (ROM, RAM)
2033 Communication port

## Claims

1. A terminal comprising:
a control unit that acquires position information of the terminal based on a radio signal from a satellite positioning system; and
a transmitting unit that transmits the position information to a base station, wherein
the control unit acquires assistance information that is information on a movement of the terminal, and
the transmitting unit transmits the assistance information to the base station.

2. The terminal according to claim 1, wherein
the assistance information includes at least one of a movement speed of the terminal, a change amount of the movement speed, a derivative of the change amount, and a movement trajectory of the terminal.

3. The terminal according to claim 2, wherein
the movement speed of the terminal, the change amount of the movement speed, the derivative of the change amount, and the movement trajectory of the terminal are predicted values in a duration including an acquisition time by the control unit.

4. The terminal according to claim 1, wherein
the assistance information is re-acquired based on a validity duration of the assistance information.

5. A terminal comprising:
a control unit that acquires position information of a terminal based on a radio signal from a satellite positioning system; and
a transmitting unit that transmits the position information to a base station, wherein
the control unit acquires assistance information that is information on a movement of the terminal and updates the position information based on the assistance information.

6. The terminal according to claim 5, wherein
the transmitting unit transmits the position information that has been updated to the base station.
